(19) **Europäisches Patentamt / European Patent Office / Office européen des brevets**

(11) **EP 4 759 953 A1**

(12) **EUROPEAN PATENT APPLICATION**
published in accordance with Art. 153(4) EPC

(43) Date of publication:
**17.06.2026 Bulletin 2026/25**

(21) Application number: **24851333.5**

(22) Date of filing: **07.05.2024**

(51) International Patent Classification (IPC):
*C22C 38/00* (2006.01)   *B23K 11/16* (2006.01)
*C21D 9/46* (2006.01)   *C22C 38/58* (2006.01)
*C23C 2/02* (2006.01)   *C23C 2/06* (2006.01)
*C23C 2/40* (2006.01)   *C22C 18/00* (2006.01)
*C22C 18/04* (2006.01)

(52) Cooperative Patent Classification (CPC):
**B23K 11/16; C21D 9/46; C22C 38/00; C22C 38/58; C23C 2/02; C23C 2/06; C23C 2/40;** C22C 18/00; C22C 18/04

(86) International application number:
**PCT/JP2024/016972**

(87) International publication number:
**WO 2025/032899 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 JP 2023131158**

(71) Applicant: **Nippon Steel Corporation**
**Tokyo 100-8071 (JP)**

(72) Inventors:
- **MITSUNOBU, Takuya**
  **Tokyo 100-8071 (JP)**
- **KIREKAWA, Naoto**
  **Tokyo 100-8071 (JP)**
- **URANAKA, Masaaki**
  **Tokyo 100-8071 (JP)**
- **TAKEBAYASHI, Hiroshi**
  **Tokyo 100-8071 (JP)**

(74) Representative: **Vossius & Partner**
**Patentanwälte Rechtsanwälte mbB**
**Siebertstraße 3**
**81675 München (DE)**

(54) **WELDED JOINT**

(57)    The present invention has as its technical problem to obtain a welded joint with an excellent LME resistance at the time of production. The welded joint of the present invention comprises a plurality of steel sheets overlaid, a nugget joining the plurality of steel sheets, a spot welded part having a pressure contact zone and a heat affected zone formed around the nugget, a non-heat affected zone of a region at the outside of the heat affected zone, and a separation zone formed around the pressure contact zone, wherein among the plurality of steel sheets, at least the one steel sheet arranged at the outermost side is a high strength steel sheet with a Vickers hardness at a center of sheet thickness of 240 Hv or more, the high strength steel sheet has a predetermined chemical composition, at a position of 50 μm to the outside from the end of the pressure contact zone, a high ferrite layer with an area ratio of ferrite phases of 90% or more is present in a thickness direction of the high strength steel sheet from a surface of the high strength steel sheet by a 5 μm or more thickness, and, at a position of 50 μm to the outside from the end of the pressure contact zone, a concentrated B part with a B intensity of 2 times or more of the B intensity of a depth of 50 μm found by TOF-SIMS measurement is present at a 1.0 μm or more thickness from the surface of the high strength steel sheet.

EP 4 759 953 A1

# Fig. 1

**Description**

FIELD

The present invention relates to a welded joint.

BACKGROUND

In recent years, the steel sheet used in automobiles, household electric appliance products, building materials, and other various fields has been made higher in strength. For example, in the automobile field, use of high strength steel sheets has been increasing for the purpose of lightening the weight of vehicle bodies for improving fuel efficiency.

In particular, in the automobile field, sometimes a welded joint obtained by spot welding a steel sheet given galvanization is used. In welding of a steel sheet given galvanization, in particular a high strength steel sheet, for example, as described in PTL 1, the drop in weldability due to liquid metal embrittlement (LME) cracking sometimes becomes a problem. LME cracking is believed to be caused by the surface layer part of a steel sheet transforming to austenite at the time of welding, molten zinc penetrating the grain boundaries causing the steel sheet to become embrittled, and further a tensile stress being applied to the steel sheet at the time of welding.

Note that PTL 2 discloses a steel sheet suppressed in LME cracking and improved in weldability which has particle size 20 nm or more Si oxide grains present at the surface layer part of the steel sheet in a 3000 to 6000/mm$^2$ number density in a suitable particle size distribution.

[CITATION LIST]

[PATENT LITERATURE]

> [PTL 1] WO2019/116531
> [PTL 2] WO2020/218575

SUMMARY

[TECHNICAL PROBLEM]

The present invention has as its technical problem the provision of a welded joint with excellent LME resistance at the time of production.

[SOLUTION TO PROBLEM]

Improvement of the LME resistance at the time of production of a welded joint has been studied from various angles. In this regard, as opposed to this, in the present invention, the inventors discovered that it is preferable to make B concentrate at the surface layer of a steel sheet forming the welded joint. To make B concentrate at the surface layer of the steel sheet, the inventors discovered that in annealing, it is effective to make internal oxidation proceed for making oxidation proceed at the surface layer of the steel sheet toward the inside of the steel sheet without allowing external oxidation to proceed at the surface of the steel sheet. The gist of the present invention is as follows.

> [1] A welded joint comprised of a plurality of steel sheets overlaid, a nugget joining the plurality of steel sheets, a spot welded part having a pressure contact zone and a heat affected zone formed around the nugget, a non-heat affected zone of a region at the outside of the heat affected zone, and a separation zone formed around the pressure contact zone, in which welded joint, among the plurality of steel sheets, at least the one steel sheet arranged at the outermost side is a high strength steel sheet with a Vickers hardness at a center of sheet thickness of 240 Hv or more, a chemical composition of the high strength steel sheet comprises, by mass%, C: 0.05 to 0.40%, Si: 0.7 to 3.0%, Mn: 0.1 to 5.0%, sol. Al: 0 to 2.0%, P: 0.0300% or less, S: 0.0300% or less, N: 0.0100% or less, B: 0.0005 to 0.0050%, Ti: 0.0010 to 0.1000%, Nb: 0 to 0.2000%, V: 0 to 0.15%, Cr: 0 to 2.00%, Ni: 0 to 2.00%, Cu: 0 to 2.00%, Mo: 0 to 1.00%, W: 0 to 1.00%, Ca: 0 to 0.1000%, Mg: 0 to 0.100%, Zr: 0 to 0.100%, Hf: 0 to 0.100%, and REM: 0 to 0.100% and has a balance of Fe and impurities, at a position of 50 μm to the outside from the end of the pressure contact zone, a high ferrite layer with an area ratio of ferrite phases of 90% or more is present in a thickness direction of the high strength steel sheet from a surface of the high strength steel sheet by a 5 $\mu$m or more thickness, and, at a position of 50 $\mu$m to the outside from the end of the pressure contact zone, a concentrated B part with a B intensity of 2 times or more of the B intensity of a depth of 50 $\mu$m found by TOF-SIMS measurement is present at a 1.0 $\mu$m or more thickness from the surface of the high strength steel sheet.

[2] The welded joint of [1], wherein the high strength steel sheet is provided with a plating layer containing Zn formed on one surface or both surfaces of the high strength steel sheet.

[3] The welded joint of [1] or [2], wherein in the non-heat affected zone, the depth where an emission intensity Bx at a depth "x" ($\mu$m) and an emission intensity B150 at a depth 150 $\mu$m in GDS measurement in the thickness direction from the steel sheet surface satisfy

$$Bx/B150 \geq 5 \ldots (1)$$

is 1.5 $\mu$m or more.

[4] The welded joint of [3], wherein in the non-heat affected zone, a maximum value Bmax of emission intensity of B in a range of a depth of 5 $\mu$m or less and an emission intensity B150 at a depth 150 $\mu$m in GDS measurement in the thickness direction from the steel sheet surface satisfy

$$Bmax/B150 \geq 8 \ldots (2)$$

[5] The welded joint or any one of [1] to [4] wherein a thickness of the high ferrite layer is 10 $\mu$m or more.

[ADVANTAGEOUS EFFECTS OF INVENTION]

According to the present invention, it is possible to obtain a welded joint with excellent LME resistance at the time of production.

BRIEF DESCRIPTION OF DRAWINGS

FIG. 1 shows on example of a structural photograph of a high ferrite layer at a surface layer part of a steel sheet forming a welded joint of the present invention.
FIG. 2 shows one example of the results of TOF-SIMS measurement of a concentrated B part at a surface layer part of a steel sheet forming a welded joint of the present invention.
FIG. 3 is a view explaining a position of breakage covered in evaluation of LME resistance in an example.

DESCRIPTION OF EMBODIMENTS

Below, one embodiment of the present invention will be explained. The present invention is not limited to the following embodiment. First, in the present embodiment, a summary of improvement of the LME resistance at the time of production of the welded joint will be explained.

If spot welding a plated steel sheet, along with the plating melting, the surface layer of the steel sheet will be heated and the steel sheet structures will transform to austenite. At that time, the molten plating will penetrate the steel sheet structures along the grain boundaries of the austenite and the crystal grain boundaries will become brittle. For this reason, if stress is applied to the steel sheet, LME cracking will easily occur at the crystal grain boundaries. In particular, it is believed that LME easily occurs since tensile stress is applied to steel sheet at the time of welding. The inventors came up with the idea of using B (below, sometimes also referred to as "boron") as the method of improving the LME resistance. Specifically, they came up with the idea of making B segregate at the Fe grain boundaries in the surface layer structures (austenite grain boundaries or ferrite grain boundaries) so as to suppress penetration of molten zinc to the Fe grain boundaries and suppress occurrence of LME.

In general, in boron steel, in particular when heating to the austenite temperature region, there is known a deboronation phenomenon where the amount of B near the surface decreases. As a result, in general, in boron steel, the concentration of B at the steel surface layer falls compared with the center part of the steel sheet. In the present embodiment, internal oxidation, which easily proceeds at the crystal grain boundaries at the surface layer of a steel sheet when annealing the steel sheet, is caused toward the inside direction of the steel sheet. Due to this, an internal oxide layer is formed inside the surface layer of the steel sheet, therefore in particular it becomes possible to immobilize the Si worsening the LME resistance as oxides at the internal oxide layer. Furthermore, the oxides formed by the internal oxidation take in the B diffusing from inside the steel sheet to the surface layer due to heating, whereby the deboronation phenomenon is suppressed. In this way, opposite to usual boron steel, a region where B is concentrated is formed at the surface layer of the steel. Due to the effect of the combination of these factors, the LME resistance at the time of production of the welded joint is improved.

Usually, when heating a steel sheet like with annealing, oxides (scale) are formed at the steel sheet surface as external oxidation. The present embodiment was based on the finding that by imparting strain to the surface layer of a steel sheet in advance to promote the diffusion of oxygen to the inside of the material and performing annealing at a suitable dew point, it is possible to promote internal oxidation without promoting external oxidation.

Below, the present embodiment will be explained in detail.

⟪Welded Joint⟫

The welded joint of the present embodiment is provided with a plurality of steel sheets overlaid, a nugget joining the plurality of steel sheets, a spot welded part having a pressure contact zone and a heat affected zone formed around the nugget, a non-heat affected zone of a region at the outside of the heat affected zone, and a separation zone formed around the pressure contact zone. Here, the "heat affected zone" is a not melted part of the steel sheet which is changed by the weld heat in structures, metallurgical properties, mechanical properties, etc. while the "non-heat affected zone" is a part other than the heated affected zone.

[High Strength Steel Sheet]

Among the plurality of steel sheets, at least the one steel sheet arranged at the outermost side is a high strength steel sheet. The present invention has as its technical problem the suppression of LME cracking occurring at the time of spot welding a steel sheet which is high in strength. LME cracking occurs in a high strength steel sheet. The welded joint of the present embodiment has the effect of suppressing LME cracking at the time of production of the welded joint. In particular, it is effective for suppressing cracking of the shoulder part of a welded part. Here, the "high strength steel sheet" means a steel sheet with a Vickers hardness of 240 Hv or more at a position of the non-heat affected zone of the welded joint at a position of 1/2 depth. Further, the "shoulder part" means a slanted part of an edge of a recess formed by an electrode at the time of spot welding.

The hardness of the steel sheet is measured at a position of the non-heat affected zone of the steel sheet forming the welded joint at a position of 1/2 depth. The hardness is measured based on JIS Z 2244: 2009. The measurement load is 200 gf. The Vickers hardness at the center of sheet thickness of the steel sheet forming the welded joint may also be 260 Hv or more, 280 Hv or more, and 300 Hv or more.

In the welded joint of the present embodiment, among the steel sheets forming the welded joint, if at least the one steel sheet arranged at the outermost side is the above high strength steel sheet, the other steel sheets may general commercially available steel sheets. Of course, all of the steel sheets may also be the above high strength steel sheets. When producing the welded joint, at least one of the surfaces which weld electrodes are made to contact on the spot welding becomes the high strength steel sheet explained below.

[Chemical Composition of High Strength Steel Sheet]

Below, the chemical composition of the high strength steel sheet will be explained. Below, the "%" relating to the chemical composition of the steel sheet shall mean "mass%". Further, in the numerical ranges in the chemical composition, a numerical range expressed using "to" will mean a range including the numerical values before and after the "to" as an upper limit value and a lower limit value.

(C: 0.05 to 0.40%)

C (carbon) is an element securing the strength of steel. To obtain the 240 Hv or more hardness targeted by the present embodiment, the content of C is 0.05% or more. Considering the weldability, the content of C is 0.40% or less. The content of C may also be 0.08% or more, 0.10% or more, or 0.15% or more. The content of C may also be 0.37% or less, 0.35% or less, or 0.30% or less.

(Si: 0.7 to 3.0%)

Si (silicon) is an element promoting decarburization and ferrite stabilization in an annealing step at the time of production of the steel sheet and an element stopping the deboronation phenomenon by internal oxidation. Further, it is an element improving the corrosion resistance of steel. Due to this, the later explained high ferrite layer and concentrated B part are formed at the surface layer of the steel sheet. To obtain this effect, the content of Si is 0.7% or more. If the content of Si is too large, since Si is an element generally lowering the LME resistance, the effect of the B distribution explained later is obstructed and the effect of improvement of the LME resistance at the time of production of the welded joint becomes smaller. Considering this point, the content of Si is 3.0% or less. The content of Si may also be 0.8% or more, 0.9% or more, or 1.0% or more. The content of Si may also be 2.5% or less, 2.0% or less, or 1.5% or less.

In the past, it had been known that the LME resistance at the time of production of a welded joint is made to fall by addition of Si into the steel. The inventors studied this and as a result, contrary to the conventional knowledge, discovered that the LME resistance at the time of production of a welded joint is improved by including Si in large amounts. This is believed to be due to the later explained inclusion of B and method of production causing the surface layer part to become mostly ferrite structures and causing B to concentrate at the surface layer part and segregate at the Fe grain boundaries.

(Mn: 0.1 to 5.0%)

Mn (manganese) is an element effective for obtaining hard structures and improving the strength of the steel. Further, in the same way as Si, it is also an element inhibiting the deboronation phenomenon by internal oxidation. To obtain these effects, the lower limit of the content of Mn is 0.1% Further, considering the drop in formability due to Mn segregation, the content of Mn is 5.0% or less. The content of Mn may also be 0.5% or more, 1.0% or more, or 1.5% or more. The content of Mn may also be 4.5% or less, 4.0% or less, or 3.5% or less.

(sol. Al: 0 to 2.0%)

Al (aluminum) is an element which dissolves in steel and promotes ferrite stabilization and decarburization. Due to this, it is possible to improve the LME resistance at the time of production of a welded joint, therefore this may be contained in accordance with need. "sol. Al" means acid soluble Al not forming $Al_2O_3$ or other oxides and able to be dissolved by acid. It is found as Al measured after deducting the insoluble residue on the filter paper formed in the process of analysis of Al. Inclusion of sol. Al is not essential. The lower limit of the content of sol. Al is 0. To obtain the effect of inclusion, the content of sol. Al may be 0.1% or more, 0.2% or more, or 0.3% or more. If the content of sol. Al is too great, even if performing high dew point annealing, external oxidation proceeds, oxides (scale) are formed at the surface layer of the steel sheet, and the LME resistance at the time of production of a welded joint falls. Considering this point, the content of sol. Al is 2.0% or less. The content of Al may also be 1.5% or less, 1.2% or less, or 1.0% or less.

(P: 0.0300% or Less)

P (phosphorus) is an impurity generally contained in steel. If the content of P is more than 0.0300%, the weldability is liable to fall. Therefore, the content of P is 0.0300% or less. The content of P may also be 0.0200% or less, 0.0100% or less, or 0.0050% or less. P is preferably not contained. The lower limit of the content of P is 0. From the viewpoint of the dephosphorization cost, the content of P may be more than 0% or 0.0001% or more.

(S: 0.0300% or Less)

S (sulfur) is an impurity generally contained in steel. If the content of S is more than 0.0300%, the weldability is liable to fall and further the amount of precipitation of MnS is liable to increase and the bendability and other formability to fall. Therefore, the content of S is 0.0300% or less. The content of S may also be 0.0100% or less, 0.0050% or less, or 0.0020% or less. S is preferably not contained. The lower limit of the content of S is 0. From the viewpoint of the desulfurization cost, the content of S may be more than 0% or 0.0001% or more.

(N: 0.0100% or Less)

N (nitrogen) is an impurity generally contained in steel. If the content of N is more than 0.0100%, the weldability is liable to fall. Therefore, the content of N is 0.0100% or less. The content of N may also be 0.0080% or less, 0.0050% or less, or 0.0030% or less. N is preferably not contained. The lower limit of the content of N is 0. From the viewpoint of the production cost, the content of N may be more than 0% or 0.0010% or more.

(B: 0.0005 to 0.0050%)

B (boron) is an element raising the hardenability to contribute to the improvement of strength and, further, segregating at the grain boundaries to strengthen the grain boundaries and improve the toughness. Further, in the steel sheet of the present embodiment, it concentrates at the surface layer of the steel sheet and is present segregated at the Fe grain boundaries. To obtain this effect, the content of B is 0.0005% or more. From the viewpoint of the toughness and weldability, the content of B is 0.0050% or less. The content of B may also be 0.0006% or more, 0.0008% or more, or 0.0010% or more. The content of B may also be 0.0040% or less, 0.0030% or less, or 0.0020% or less.

In general, at the steel surface layer, the deboronation phenomenon causes the concentration of B to fall compared with the center part of the steel sheet. In the present embodiment, using the later explained method of production, internal oxidation toward the inside of the steel sheet is promoted in the annealing step to cause B to be taken in at the oxides and suppress the deboronation phenomenon and form the later explained distribution of concentration at the surface layer of the steel. The B segregated at the Fe grain boundaries is believed to suppress LME at the time of production of a welded joint.

(Ti: 0.0010 to 0.1000%)

Ti (titanium) is an element precipitating as TiC during cooling of steel and contributing to improvement of the strength. To obtain this effect, the content of Ti is 0.0010% or more. If excessively added, coarse TiN is formed and the toughness is liable to be impaired, therefore the content of Ti is 0.1000% or less. The content of Ti may also be 0.0020% or more, 0.0030% or more, 0.0040% or more, 0.0080% or more, 0.0110% or more, or 0.0130% or more. The content of Ti may also be 0.0900% or less, 0.0800% or less, 0.0600% or less, 0.0500% or less, or 0.0400% or less.

(Nb: 0 to 0.2000%)

Nb (niobium) is an element contributing to improvement of strength through improvement of the hardenability, therefore may be contained in accordance with need. It is not an essential element, therefore the lower limit of the content of Nb is 0. This effect is obtained even with a trace amount of content, but if contained, the content of Nb may be 0.0001% or more, 0.0002% or more, 0.0003% or more, 0.0004% or more, or 0.0010% or more. From the viewpoint of securing the toughness, the content of Nb is 0.2000% or less. The content of Nb may also be 0.1500% or less, 0.1000% or less, 0.0600% or less, 0.0400% or less, 0.0200% or less, 0.0100% or less, 0.0050% or less, 0.0030% or less, or 0.0020% or less.

(V: 0 to 0.15%)

V (vanadium) is an element contributing to improvement of strength through improvement of the hardenability, therefore may be contained in accordance with need. It is not an essential element, therefore the lower limit of the content of V is 0. This effect is obtained even with a trace amount of content, but if contained, the content of V may be 0.001% or more, 0.002% or more, 0.003% or more, 0.005% or more, 0.006% or more, 0.008% or more, or 0.01% or more. From the viewpoint of securing the toughness, the content of V is 0.15% or less. The content of V may also be 0.14% or less, 0.13% or less, 0.12% or less, 0.10% or less, 0.08% or less, 0.05% or less, 0.04% or less, 0.03% or less, or 0.02% or less.

(Cr: 0 to 2.00%)

Cr (chromium) is effective for raising the hardenability of steel to raise the strength of the steel, therefore may be contained in accordance with need. It is not an essential element, therefore the lower limit of the content of Cr is 0. This effect is obtained even with a trace amount of content, but if contained, the content of Cr may be 0.001% or more, 0.01% or more,, 0.05% or more, 0.07% or more, or 0.10% or more. If excessively containing Cr, Cr carbides are formed in large amounts and conversely the hardenability is liable to be impaired, therefore the content of Cr is 2.00% or less. The content of Cr may also be 1.80% or less, 1.50% or less, 1.20% or less, 0.80% or less, 0.60% or less, 0.50% or less, 0.30% or less, or 0.20% or less.

(Ni: 0 to 2.00%)

Ni (nickel) is effective for raising the hardenability of steel to raise the strength of the steel, therefore may be contained in accordance with need. It is not an essential element, therefore the lower limit of the content of Ni is 0. This effect is obtained even with a trace amount of content, but if contained, the content of Ni may be 0.001% or more, 0.01% or more, 0.02% or more, 0.03% or more, 0.04% or more, or 0.05% or more. Excessive addition of Ni causes the costs to rise, therefore the content of Ni is 2.00% or less. The content of Ni may also be 1.80% or less, 1.50% or less, 1.20% or less, 0.80% or less, 0.60% or less, 0.50% or less, 0.40% or less, 0.20% or less, or 0.15% or less.

(Cu: 0 to 2.00%)

Cu (copper) is effective for raising the hardenability of steel to raise the strength of the steel, therefore may be contained in accordance with need. It is not an essential element, therefore the lower limit of the content of Cu is 0. This effect is obtained even with a trace amount of content, but if contained, the content of Cu may be 0.001% or more, 0.01% or more, 0.02% or more, 0.03% or more, 0.05% or more, or 0.07% or more. From the viewpoint of suppression of a drop in toughness or cracking of the slab after casting or a drop in weldability, the content of Cu is 2.00% or less. The content of Cu may also be 1.80% or less, 1.50% or less, 1.20% or less, 1.00% or less, 0.80% or less, 0.60% or less, 0.50% or less, 0.30% or less, 0.20% or less, or 0.15% or less.

(Mo: 0 to 1.00%)

Mo (molybdenum) is effective for raising the hardenability of steel to raise the strength of the steel, therefore may be contained in accordance with need. It is not an essential element, therefore the lower limit of the content of Mo is 0. This effect is obtained even with a trace amount of content, but if contained, the content of Mo may be 0.001% or more, 0.01% or more, 0.02% or more, 0.03% or more, 0.05% or more, or 0.06% or more. From the viewpoint of suppressing a drop in toughness, the content of Mo is 1.00% or less. The content of Mo may also be 0.80% or less, 0.60% or less, 0.40% or less, 0.30% or less, 0.20% or less, or 0.15% or less.

(W: 0 to 1.00%)

W (tungsten) is effective for raising the hardenability of steel to raise the strength of the steel, therefore may be contained in accordance with need. It is not an essential element, therefore the lower limit of the content of W is 0. This effect is obtained even with a trace amount of content, but if contained, the content of W may be 0.001% or more, 0.01% or more, 0.02% or more, or 0.03% or more. From the viewpoint of suppressing a drop in toughness, the content of W is 1.00% or less. The content of W may also be 0.80% or less, 0.60% or less, 0.40% or less, 0.30% or less, 0.20% or less, 0.15% or less, or 0.10% or less.

(Ca: 0 to 0.1000%)

Ca (calcium) is an element contributing to the control of inclusions, in particular the fine dispersion of inclusions, and having the action of raising the toughness, therefore may be contained in accordance with need. It is not an essential element, therefore the lower limit of the content of Ca is 0. This effect is obtained even with a trace amount of content, but if contained, the content of Ca may also be 0.0001% or more, 0.0005% or more, 0.0010% or more, 0.0020% or more, 0.0040% or more, 0.0060% or more, or 0.0070% or more. If excessively including Ca, sometimes deterioration of the surface properties arises, therefore the content of Ca is 0.1000% or less. The content of Ca may also be 0.0800% or less, 0.0600% or less, 0.0500% or less, 0.0400% or less, 0.0300% or less, or 0.0200% or less.

(Mg: 0 to 0.100%)

Mg (magnesium) is an element contributing to the control of inclusions, in particular the fine dispersion of inclusions, and having the action of raising the toughness, therefore may be contained in accordance with need. It is not an essential element, therefore the lower limit of the content of Mg is 0. This effect is obtained even with a trace amount of content, but if contained, the content of Mg may be 0.0001% or more, 0.0005% or more, 0.001% or more,, 0.002% or more, 0.004% or more, 0.008% or more, 0.010% or more, or 0.015% or more. If excessively containing Mg, sometimes deterioration of the surface properties surfaces, therefore the content of Mg may also be 0.100% or less. The content of Mg may also be 0.090% or less, 0.080% or less, 0.070% or less, 0.050% or less, 0.040% or less, or 0.030% or less.

(Zr: 0 to 0.100%)

Zr (zirconium) is an element contributing to the control of inclusions, in particular the fine dispersion of inclusions, and having the action of raising the toughness, therefore may be contained in accordance with need. It is not an essential element, therefore the lower limit of the content of Zr is 0. This effect is obtained even with a trace amount of content, but if contained, the content of Zr is preferably 0.001% or more, 0.003% or more, 0.005% or more, 0.008% or more, or 0.010% or more. If excessively containing Zn, sometimes deterioration of the surface properties surfaces, therefore the content of Zr is 0.100% or less. The content of Zr may also be 0.090% or less, 0.080% or less, 0.060% or less, 0.050% or less, 0.040% or less, or 0.030% or less.

(Hf: 0 to 0.10%)

Hf (hafnium)is an element contributing to the control of inclusions, in particular the fine dispersion of inclusions, and having the action of raising the toughness, therefore may be contained in accordance with need. It is not an essential element, therefore the lower limit of the content of Hf is 0. This effect is obtained even with a trace amount of content, but if contained, the content of Hf may also be 0.001% or more, 0.002% or more, or 0.005% or more. If excessively containing Hf, sometimes deterioration of the surface properties surfaces, therefore the content of Hf is 0.10% or less, 0.08% or less, 0.06% or less, 0.05% or less, 0.04% or less, 0.03% or less, or 0.02% or less.

(REM: 0 to 0.100%)

A REM (rare earth element) is an element contributing to the control of inclusions, in particular the fine dispersion of inclusions, and having the action of raising the toughness, therefore may be contained in accordance with need. It is not an essential element, therefore the lower limit of the content of a REM is 0%. This effect is obtained even when contained in a trace amount, but if contained, the content of a REM may also be 0.0001 % or more, 0.005% or more, or 0.001% or more. If excessively containing a REM, sometimes deterioration of the surface properties surfaces, therefore the content of a REM is 0.100% or less. The content of a REM may also be 0.090% or less, 0.080% or less, 0.060% or less, 0.050% or less, 0.040% or less, 0.030% or less, 0.020% or less, 0.010% or less, or 0.005% or less. Note that "REM" is an abbreviation for a rare earth metal and means an element belonging to the lanthanoids. A REM is usually added as a misch metal.

(Balance)

In the steel sheet forming the welded joint according to the present embodiment, the balance beside the above chemical composition is Fe and impurities. Here, "impurities" are constituents entering due to various factors in the production process such as the ore, scraps, and other such starting materials when industrially producing steel sheet and not having a detrimental effect on the LME resistance of the steel sheet forming the welded joint according to the present embodiment. That is, they mean constituents contained in a range giving the LME resistance sought in the steel sheet of the present embodiment. As a specific element, for example, O (oxygen) may be mentioned. The content of O contained as an impurity may also be 0.0500% or less, 0.0300% or less, 0.0200% or less, or 0.0100% or less. However, from the viewpoint of the production costs, the content of O may be 0.00001% or more, 0.00005% or more, or 0.0001% or more.

(Method of Analysis of Chemical Composition)

The chemical composition of the steel sheet may be analyzed using an elemental analysis method known to persons skilled in the art. For example, it is analyzed by inductively coupled plasma - mass spectrometry (ICP-MS method). However, C and S may be measured using the combustion-infrared absorption method, while N can be measured using the inert gas melting-thermal conductivity method. For O, the inert gas melting-infrared absorption method is used. These analyses may be performed on a sample taken from the steel sheet by a method based on JIS G0417: 1999.

[High Ferrite Layer]

In the high strength steel sheet forming the welded joint of the present embodiment, at a position 50 $\mu$m to the outside from the end of the pressure contact zone, a high ferrite layer is present in a 5 $\mu$m or more thickness in the thickness direction of the high strength steel sheet from the surface of the high strength steel sheet. Here, the "high ferrite layer" means the structures with an area ratio of ferrite phases of 90% or more. Further, the position of 50 $\mu$m to the outside from the end of the pressure contact zone may be deemed the "heat affected zone". The welded joint of the present embodiment is characterized by the point that there is a high ferrite layer formed at the time of steel sheet production present as well at the heat affected zone affected by the weld heat at the time of production of the welded joint.

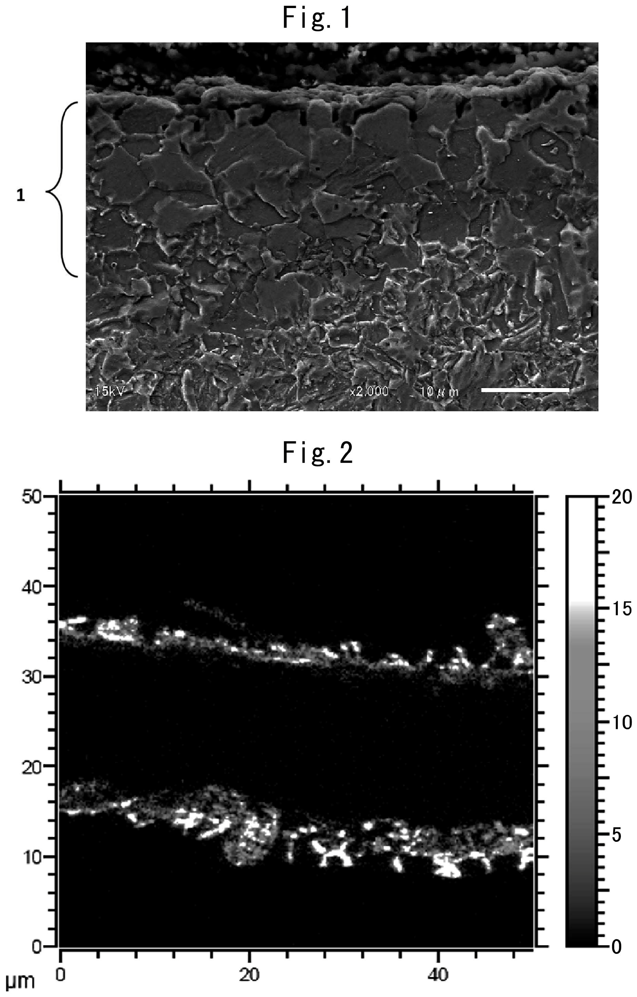

FIG. 1 shows one example of a structural photograph by an SEM of the vicinity of the surface layer at a position of 50 $\mu$m to the outside from the end of the pressure contact zone of a high strength steel sheet forming the welded joint of the present embodiment. FIG. 1 is a cross-section of the thickness direction of the steel sheet. The top side is the steel sheet surface. As shown in FIG. 1, in the welded joint of the present embodiment, at the heat affected zone due to welding, there is a high ferrite layer 1 with an area ratio of ferrite phases of 90% or more at the front surface side of the steel sheet present. There is a later explained concentrated B part present at this layer, therefore the welded joint LME resistance at the time of production is improved.

If the thickness of the high ferrite layer becomes 5 $\mu$m or more, the effect of improvement of the LME resistance is obtained, therefore the upper limit of this thickness is not prescribed. For example, it may be 100 $\mu$m or less, 80 $\mu$m or less,

60 $\mu$m or less, or 40 $\mu$m or less. The thickness of the high ferrite layer is preferably large from the viewpoint of the LME resistance. It is preferably 8 $\mu$m or more, more preferably 10 $\mu$m or more, 12 $\mu$m or more, 15 $\mu$m or more, 20 $\mu$m or more, or 25 $\mu$m or more.

The structures besides ferrite in the high ferrite layer are not particularly limited. For example, they may be one or more of martensite, bainite, and cementite.

The thickness of the high ferrite layer is found by etching a sheet thickness cross-section of the steel sheet by Nital and examining it by a power of 1000X by an SEM. From the form of the structures, martensite, bainite, and other hard structures containing relatively large amounts of cementite and ferrite are differentiated and found. The thickness of the high ferrite layer is made the average value of the thickness measured in five measurement ranges, each measurement range being a range of 500 $\mu$m in the direction vertical to the sheet thickness direction, at intervals of 1000 $\mu$m in a direction vertical to the sheet thickness direction. Here, the area ratio of the ferrite means the area ratio found by examining the sheet thickness cross-section. If examining local places in the middle of the thickness direction, even if for example there are places with area ratios of ferrite of less than 90%, there is no problem if the area ratio of ferrite is 90% or more in the sheet thickness cross-section from the surface to a depth down to 5 $\mu$m.

The ferrite area ratio is found by cutting out a cross-section of the steel sheet in the sheet thickness direction perpendicular with the rolling direction of the steel sheet, polishing it to a mirror finish, using a Nital reagent to bring out the steel structures, and using a field emission type scanning electron microscope to photograph a secondary electron image. The examined position is made a range of 500 $\mu$m from the surface of the steel sheet or the interface of the plating layer and the steel sheet. Five fields are examined at equal intervals. In the obtained structural photographs, the point counting method is used to calculate the fractions of the structures. More specifically, first, a grid of equal spacings is drawn on the structural photograph. Next, it is judged which of tempered martensite, pearlite, ferrite, fresh martensite, retained austenite, or bainite the structures at the grid points correspond to. The numbers of grid points corresponding to the different structures can be found and divided by the total number of grid points to determine the fractions of the structures. The greater the total number of grid points, the more accurately the area ratios can be bound. In the present embodiment, the grid spacings are made 2 $\mu$m $\times$ 2 $\mu$m and the total number of grid points is made 1500 points.

The judgment criteria for tempered martensite, pearlite, ferrite, fresh martensite, or retained austenite or bainite are shown below. A region having substructures (lath boundaries and block boundaries) in the grains and having carbides precipitated with several variants is judged as tempered martensite. Further, a region having cementite precipitated in a lamellar form is judged as pearlite. A region having a small brightness and not having substructures observed is judged as ferrite. A region having a large brightness and not having substructures appearing by etching is judged as fresh martensite or retained austenite. A region not corresponding to any of the above is judged as bainite. For simplicity, the area ratio of the ferrite phase can be found if differentiating the ferrite from other structures.

Ferrite is a structure with a lower LME sensitivity than austenite. By the high ferrite layer being present at the surface layer of the steel sheet, the welded joint LME resistance at the time of production is improved. In the present embodiment, the LME resistance is further improved by the presence of the later mentioned concentrated B part.

[Concentrated B Part]

In the high strength steel sheet forming the welded joint of the present embodiment, at the position of 50 $\mu$m to the outside from the end of the pressure contact zone, the concentrated B part is present at a 1.0 $\mu$m or more thickness from the surface of the high strength steel sheet in the thickness direction of the high strength steel sheet. Here, the "concentrated B part" means the portion where the B intensity found by TOF-SIMS (Time-of-Flight Secondary Ion Mass Spectrometry) measurement becomes 2 times or more of the B intensity of the position of a depth 50 $\mu$m found in the TOF-SIMS measurement. FIG. 2 shows one example of the results of measurement by TOF-SIMS. FIG. 2 shows the results of measurement of the C cross-section of the part where two steel sheets overlap in the welded joint. The up-down direction is the thickness direction of the steel sheet. The brighter the result of measurement of FIG. 2, the higher the B concentration shown. The dark part in the vicinity of the center is the clearance between the two steel sheets. From the result of measurement of FIG. 2, it will be understood that the B concentration becomes higher in the vicinity of the surface of the steel sheet.

The analysis by the TOF-SIMS is performed using as an apparatus a TOF-SIMS (made by ION-TOF) under conditions of a primary ion: $Bi_3^{2+}$, acceleration voltage: 25 kV, measurement area: 50 $\mu$m square. The measurement is performed while moving the field in a thickness direction of the high strength steel sheet so that the concentrated B part of the high strength steel sheet surface and the position with a depth from the surface of 50 $\mu$m are measured.

The thicker the concentrated B part, the better from the viewpoint of the welded joint LME resistance at the time of production. The thickness is preferably 2.0 $\mu$m or more, more preferably 3.0 $\mu$m or more, 4.0 $\mu$m or more, or 5.0 $\mu$m or more.

In the welded joint of the present embodiment, it is believed the B concentrated at the surface layer of the steel sheet forming the welded joint in this way is segregated at the Fe grain boundaries and stops penetration of Zn to thereby suppress LME at the time of production of the welded joint. Such a distribution of B at the surface layer can be obtained by producing a steel sheet from molten steel having the above chemical composition by the later method of production.

[Plating Layer]

The high strength steel sheet forming the welded joint of the present embodiment may be provided at its surface with a plating layer containing Zn. The plating layer may be formed at only one surface of the high strength steel sheet or may be formed at both surfaces. Further, the plating layer may be formed at just part of a surface.

The plating layer is not particularly limited so long as containing Zn. As examples, Zn-0.2%Al (GI), Zn-(0.3 to 1.5)%Al, Zn-4.5%Al, Zn-0.09%Al-10%Fe (GA), Zn-1.5%Al-1.5%Mg, Zn-11%Al-3%Mg-0.2%Si, Zn-11%Ni, Zn-15%Mg, Zn-20%Al-7%Mg, and Zn-30%Al-10%Mg may be mentioned.

The chemical composition of the plating layer can be determined by dissolving the plating layer in an acid solution to which an inhibitor has been added to suppress corrosion of the steel sheet and measuring the obtained solution by ICP (high frequency inductively coupled plasma) mass spectrometry.

The thickness of the plating layer may for example be 3 to 50 $\mu$m. Further, the amount of deposition of the plating layer is not particularly limited, but for example may be, per surface, 10 to 170 g/m$^2$. In the present embodiment, the amount of deposition of the plating layer is determined by dissolving the plating layer in an acid solution to which an inhibitor has been added to suppress corrosion of the steel sheet and finding the change in weight before and after pickling and peeling of the plating layer. As the acid solution to which an inhibitor is added, for example, a 10% hydrochloric acid solution to which 0.06 mass% of an inhibitor (made by Asahi Chemical Co., Ltd., ibit 710K) has been added may be used. The base steel sheet after removal of the plating layer is rinsed and dried.

The thickness of the plating layer may be 5 $\mu$m or more, 7 $\mu$m or more, or 10 $\mu$m or more. The thickness of the plating layer may also be 45 $\mu$m or less, 40 $\mu$m or less, 35 $\mu$m or less, or 30 $\mu$m or less. The amount of deposition of the plating layer may be, per surface, 15 g/m$^2$ or more, 20 g/m$^2$ or more, 25 g/m$^2$ or more, or 30 g/m$^2$ or more. The amount of deposition of the plating layer may be, per surface, 160 g/m$^2$ or less, 140 g/m$^2$ or less, 120 g/m$^2$ or less, or 100 g/m$^2$ or less.

If the welded joint includes a general steel sheet etc. not the above-mentioned high strength steel sheet, the steel sheet not a high strength steel sheet may have the above-mentioned plating layer.

Note that, the welded joint of the present embodiment has the effect of improvement of the LME resistance at the time of production even in the case where the steel sheet forming the welded joint, in particular the high strength steel sheet arranged at the outermost side, is not provided with plating. If there is no molten zinc present, LME cracking will not occur, but for example if using weld electrodes which have spot welded steel sheets provided with zinc plating to weld steel sheets which have not been plated, the plating deposited on the weld electrodes will melt and transfer to the steel sheets which have not been plated thereby causing LME cracking. According to the welded joint of the present embodiment, even in such a case, it is possible to stop the penetration of molten zinc into the Fe grain boundaries due to the B concentrated at the surface layer, therefore the effect is exhibited of suppression of LME cracking at the time of production of the welded joint. Therefore, in the welded joint of the present embodiment, the plating is not an essential constituent element.

[B Distribution of Surface Layer]

In the welded joint of the present embodiment, at the steel sheet forming the welded joint, in particular the heat affected zone of the high strength steel sheet, in measurement by GDS (high frequency glow discharge spectrometry) in the thickness direction of the steel sheet, the depth satisfying the following formula (1) is preferably 1.5 $\mu$m or more from the surface of the steel sheet.

$$Bx/B150 \geq 5 \ \ldots(1)$$

In the above formula (1), Bx indicates the emission intensity at a point separated from the interface of the steel sheet and plating layer by a depth "x" ($\mu$m) in a thickness direction of the steel sheet. Further, B150 indicates the emission intensity at a depth of 150 $\mu$m from the interface of the steel sheet and plating layer in the thickness direction of the steel sheet. Note that, the "thickness direction" in the present embodiment means the direction vertical to the interface of the steel sheet and plating layer. The "point separated from the interface of the steel sheet and plating layer in the thickness direction of the steel sheet" is the point separated toward the center direction of the steel sheet thickness.

The left side of the above formula (1) shows the ratio of the B concentration at the depth "x" with respect to the B concentration at the depth 150 $\mu$m. That is, Bx/B150 $\geq$ 5 means that the B concentration at the depth "x" is 5 times or more the B concentration at the depth 150 $\mu$m. The B concentration at the depth 150 $\mu$m may be deemed the B concentration at the center of thickness of the steel sheet. Bx/B 150 $\geq$ 5 means B is concentrated at the depth "x". The "depth satisfying formula (1) being 1.5 $\mu$m or more from the surface of the steel sheet" means formula (1) is satisfied in the range from the surface of the steel sheet down to a depth of 1.5 μm or more in the thickness direction of the steel sheet and means that B is concentrated in the range down to a depth of 1.5 μm or more in the thickness direction of the steel sheet.

The surface of the steel sheet and the interface of the steel sheet and plating layer in the present embodiment are defined as follows: First, the content of Fe in the thickness direction of the plated steel sheet is measured by GDS measurement. The highest value of this Fe content is made the Fe content of the steel sheet. The point where the Fe content becomes 5% of the Fe content of the steel sheet is defined as the "surface of the steel sheet". If the surface of the steel sheet is formed with a plating layer, the interface of the steel sheet and plating layer is deemed the surface of the steel sheet and is made the starting point of the depth in GDS measurement. The "interface of the steel sheet and the plating layer" is defined as the point where the Fe content found by GDS measurement becomes 93% of the Fe content of the steel sheet.

By B concentrating at the surface layer of the steel sheet as explained above, B is segregated at the Fe grain boundaries of the surface structures. Due to this, it is possible to keep molten zinc from penetrating the Fe grain boundaries at the time of spot welding and suppress occurrence of LME at the time of production of the welded joint.

(Method of Measurement of GDS)

Bx, B150 are found by GDS. The surface of the steel sheet covered is rendered an Ar atmosphere, voltage is applied to generate plasma, and, in that state, the steel sheet surface is sputtered to analyze elements in the depth direction. The elements included in the material are identified from the emission spectrum wavelengths unique to the elements emitted due to atoms excited in the glow plasma. The emission intensities of the identified elements are also estimated.

Data of the depth direction can be estimated from the sputter time. Specifically, it is possible to use standard samples in advance to find the relationship between the sputter time and sputter depth and convert the sputter time to the sputter depth. Therefore, the sputter depth converted from the sputter time can be defined as the depth from the surface of the material. The sputter time is set so that the sputter depth becomes at least higher than 150 μm.

GDS measurement is performed five times in the sheet thickness direction and the average of the values found is deemed the B concentration. The measurement conditions are as follows: The B concentrations corresponding to x (μm) depth and 150 μm depth respectively are Bx, B150.

Apparatus: high frequency glow discharge optical emission spectrometry apparatus (made by LECO Japan Corporation, Model Name "GDS850A"
Ar gas pressure: 0.3 MPa
Anode diameter: 4 mmφ
RF output: 30W
Measurement time: 200 to 1500 seconds

To obtain the effect of suppression of occurrence of LME, the depth satisfying Bx/B150≥5.0 is preferably 1.5 μm or more. From the viewpoint of the LME resistance, a larger Bx/B150 is preferable. It may be 1.6 μm or more, 1.8 μm or more, 2.0 μm or more, 2.5 μm or more, or 3.0 μm or more. Bx/B150 is the ratio of the B concentration at the depth "x" with respect to the B concentration at the depth 150 μm, therefore the depth satisfying Bx/B150≥5.0 is less than 150 μm. Even if the depth satisfying Bx/B150≥5.0 is made deeper, the LME resistance will not fall, but the depth satisfying Bx/B150≥5.0 may be 100.0 μm or less, 50.0 μm or less, 30.0 μm or less, 20.0 μm or less, or 10.0 μm or less.

In the welded joint of the present embodiment, B concentrating at the surface layer of the steel sheet forming the welded joint in this way is segregated at the Fe grain boundaries. Due to this, it is believed penetration of molten zinc into the Fe grain boundaries at the time of spot welding is suppressed and LME at the time of production of the welded joint is suppressed. Such a B distribution of the surface layer can be obtained by producing the steel sheet by the later explained method of production from molten steel having the above-mentioned chemical composition.

<B Concentration in Range Down to 5.0 μm Depth>

In the steel sheet forming the welded joint of the present embodiment, in the above-mentioned GDS measurement, the following formula (2) is preferably further satisfied.

$$Bmax/B150 \geq 8 \ \ldots(2)$$

In the above formula (2), Bmax is the maximum value of the emission intensity of B in the range from the surface of the steel sheet down to a depth of 5.0 μm.

The left side of formula (2) shows the ratio of the maximum value of the emission intensity of B in the range from the surface of the steel sheet down to a depth of 5.0 μm with respect to the B concentration at the depth of 150 μm. That is, Bmax/B150≥8 means the B concentration at the position where B is most concentrated in the range from the surface of the steel sheet down to a depth of 5.0 μm is 8 times or more of the B concentration at the depth of 150 μm. The B concentration at the depth of 150 μm may be deemed the "B concentration at the center of sheet thickness of the steel sheet". Bmax/B150≥8 means that the concentration of B is large from the surface of the steel sheet down to 5.0 μm, that is, in the vicinity of the surface.

Bmax/B150 is preferably large from the viewpoint of the LME resistance. It is preferably 10 or more, more preferably 12 or more, 14 or more, or 16 or more.

Satisfying formula (2) is not essential in the steel sheet of the present embodiment. Even if not satisfying formula (2), if satisfying formula (1), an excellent LME resistance can be obtained. By making the B distribution of the surface layer one satisfying formula (2), the B concentrating more greatly at the surface layer of the steel segregates at the Fe grain boundaries and can keep molten zinc from penetrating them, therefore the effect of suppression of LME can be obtained more greatly.

[Sheet Thickness]

The sheet thickness of the steel sheet forming the welded joint of the present invention is not particularly limited. For example, it may be 0.6 to 3.2 mm. The sheet thickness may also be 0.8 mm or more or 1.0 mm or more. The sheet thickness may also be 3.0 mm or less, 2.8 mm or less, 2.6 mm or less, 2.5 mm or less, 2.4 mm or less, 2.2 mm or less, 2.0 mm or less, or 1.8 mm or less.

<<Method of Production of Steel Sheet>>

Next, the method of production of the steel sheet forming the welded joint of the present embodiment will be explained.

The steel sheet forming the welded joint according to the present embodiment can be obtained by a method of production comprising a casting step of casting molten steel adjusted in chemical composition to form a steel slab, a hot rolling step of hot rolling the steel slab to obtain a hot rolled steel sheet, a coiling step of coiling up the hot rolled steel sheet, a pickling step of pickling the coiled hot rolled steel sheet, a cold rolling step of cold rolling the pickled hot rolled steel sheet to obtain a cold rolled steel sheet, and an annealing step of annealing the cold rolled steel sheet. Alternatively, after the hot rolling step, the hot rolled steel sheet need not be coiled, but may be pickled then cold rolled as it is.

[Casting Step]

The conditions of the casting step are not particularly limited. For example, after smelting by a blast furnace, electric furnace, etc., various types of secondary refining may be performed, then the usual continuous casting, casting by ingot method, or other method may be used for casting.

[Hot Rolling Step]

The steel slab obtained by casting can be hot rolled to obtain a hot rolled steel sheet. The hot rolling step is performed by hot rolling the cast steel slab directly or after cooling once, then reheating it. If reheating, the heating temperature of the steel slab may, for example, be 1100 to 1250°C. In the hot rolling step, usually rough rolling and finish rolling are performed. The temperature and reduction rate of each rolling may be suitably changed in accordance with the desired microstructure or sheet thickness. For example, the end temperature of the finish rolling may be 900 to 1050°C and the reduction rate of the finish rolling may be 10 to 50%.

[Coiling Step]

The hot rolled steel sheet can be coiled at a predetermined temperature. The coiling temperature may be suitably changed in accordance with the desired microstructure etc. For example, it may be 500 to 800°C. Before coiling or after coiling, then uncoiling, the hot rolled steel sheet may be subjected to predetermined heat treatment. Alternatively, the coiling step need not be performed and the hot rolled steel sheet can be pickled after the hot rolling step and the later explained cold rolling performed.

[Pickling Step]

After hot rolling, the steel sheet is pickled. In the method of production of the steel sheet forming the welded joint of the present embodiment, to make B concentrate at the surface layer of the steel sheet in the later annealing step, the roughness of the steel sheet surface after pickling is controlled. Specifically, the roughness is made an arithmetic average height Ra defined by JIS B0601: 2013 of 1.5 μm or more. This condition means there is a certain degree of roughness present at the steel sheet surface. If the roughness is small, the strain which is imparted to the surface layer of the steel sheet becomes smaller, therefore internal oxidation no long proceeds and concentration of B at the surface layer of the steel sheet no longer proceeds even due to the later mentioned annealing at a high dew point.

The greater the roughness Ra, the more preferable. 2.0 μm or more is preferable, while 2.5 μm or more, 3.0 μm or more, or 3.5 μm or more is more preferable.

The roughness of the steel sheet surface after pickling is determined based on JIS B 0601: 2013 by randomly selecting 10 locations at the surface at the surface layer part side and measuring the surface profile at the respective locations by a contact type surface roughness meter. The surface roughnesses at the respective locations are arithmetically averaged to find the "arithmetic average roughness Ra". The roughness of the steel sheet surface after pickling does not have to be constantly measured. Measurement of the roughness may be omitted after the pickling conditions at which the desired roughness are formed are determined.

The roughness of the surface of a steel sheet changes depending on the pickling conditions, therefore it is sufficient to suitably adjust the conditions so that the above roughness is obtained. For example, a 20 to 95°C temperature 1 to 10 mass% hydrochloric acid solution may be used for pickling for a 30 to less than 200 second pickling time.

By the steel sheet surface after pickling being provided with such roughness and by rolling this roughness in the later cold rolling step so as to impart strain to the surface layer of the steel, concentration of B at the surface layer of the steel sheet in the later annealing step is promoted.

[Cold Rolling Step]

After pickling the hot rolled steel sheet, the hot rolled steel sheet can be cold rolled to obtain a cold rolled steel sheet. In the cold rolling step, the roughness imparted in the above pickling step is crushed by rolling to thereby impart strain to the surface layer of the steel sheet. For this reason, the rolls used for the cold rolling are preferably ones having small roughness of the surface. The surface roughness of the rolls is preferably an Ra of 1.0 μm or less. The surface roughness of the rolls may also be an Ra of 0.8 μm or less, 0.6 μm or less, or 0.5 μm or less. The reduction rate of the cold rolling may be suitably changed in accordance with the desired microstructure or sheet thickness. For example, it may be 20 to 80%. After the cold rolling step, for example, the steel sheet may be air cooled down to room temperature for cooling.

By the roughness of the surface of the hot rolled steel sheet being rolled in the cold rolling step, strain is imparted to the surface layer of the steel sheet. Due to this, concentration of B at the surface layer of the steel sheet is promoted in the subsequent annealing step.

[Annealing Step]

After the cold rolling step, the obtained cold rolled steel sheet is treated by the following high dew point annealing. In the method of production of the steel sheet and hot dip galvannealed steel sheet of the present embodiment, in the annealing step, oxidation proceeds at the surface layer of the steel sheet toward the inside of the steel sheet as internal oxidation without external oxidation being made to proceed at the surface of the steel sheet.

In the annealing step of the present embodiment, the steel sheet to which strain has been imparted at the surface layer by the above-mentioned steps is held at a high dew point. Specifically, the holding temperature of the annealing step is 760 to 900°C in order for the internal oxidation to proceed and concentration of B to be promoted, while, the holding time at the holding temperature is 0 to 360 seconds. The holding temperature may also be 770°C or more, 780°C or more, or 790°C or more. The holding temperature may also be 890°C or less, 880°C or less, or 870°C or less. The holding time may also be 10 seconds or more, 30 seconds or more, 50 seconds or more, or 60 seconds or more. The holding time may also be 330 seconds or less, 300 seconds or less, 270 seconds or less, 240 seconds or less, or 200 seconds or less.

The atmosphere in the annealing is preferably a nonoxidizing atmosphere. For example, it may be $N_2$ -2 to 4vol% $H_2$. The oxygen concentration of the atmosphere is preferably 50 ppm or less and may also be 30 ppm or less, 20 ppm or less, or 10 ppm or less. By setting such conditions, it is possible to suppress oxidation of the plating surface while making internal oxidation proceed. The rate of temperature rise up to the holding temperature is not particularly limited. The rate of temperature rise may for example be 1 to 10°C/s. If the rate of temperature rise is less than 1°C/s, it takes too much time for raising the temperature to the control temperature and the oxides on the surface of the plating layer are liable to become thicker. On the other hand, if the rate of temperature rise is more than 10°C/s, internal oxidation will not sufficiently proceed, the strain imparted to the steel sheet surface layer will not be sufficiently released, and the B concentration is liable to become insufficient. From these viewpoints, the rate of temperature rise may be 2°C/s or more, 3°C/s or more, or 4°C/s or more. The rate of temperature rise may also be 9°C/s or less, 8°C/s or less, or 7°C/s or less.

In the annealing step in the method of production of the steel sheet forming the welded joint of the present embodiment, the dew point is changed between the first half and second half of the rise of temperature. Specifically, the dew point in the range from room temperature up to the control temperature and the dew point in the range from the control temperature to the holding temperature are made different.

The control temperature is the temperature of change of the dew point and is 450 to 550°C. In the range of temperature rise from room temperature to the control temperature, the dew point in the annealing atmosphere is -40°C or more and -20°C or less. In the range from the control temperature to the holding temperature, the dew point of the annealing atmosphere is made more than -20°C and 20°C or less.

If the control temperature is less than 450°C, the dew point rises at a low temperature, therefore internal oxidation proceeds at a low temperature, strain imparted to the steel sheet surface layer is released, and sufficient internal oxidation for suppression of the deboronation phenomenon no longer occurs in the range from the control temperature to the holding temperature. If the control temperature is more than 550°C, the strain imparted to the steel sheet surface layer is released before internal oxidation proceeds at a high temperature, and sufficient internal oxidation for suppression of the deboronation phenomenon no longer occurs.

If the dew point in the range from room temperature to the control temperature is less than - 40°C, Si and Mn will externally oxidize and internal oxidation is liable to no longer proceed in the range from the control temperature to the holding temperature. If the dew point in the range from room temperature to the control temperature is more than -20°C, internal oxidation will proceed at a low temperature and the strain imparted to the surface layer of the steel sheet will be released. As a result, internal oxidation for suppressing the deboronation phenomenon is liable to no longer occur in the range from the control temperature to the holding temperature.

Similarly, if the dew point in the range from the control temperature to the holding temperature is -20°C or less, the internal oxidation for suppressing the deboronation phenomenon is liable to be unable to proceed sufficiently. If the dew point in the range from the control temperature to the holding temperature is more than 20°C, external oxidation will proceed and the internal oxidation for suppressing the deboronation phenomenon is liable to be unable to proceed sufficiently.

Furthermore, the dew point in the range from the control temperature to the holding temperature is made 10°C or more higher than the dew point in the range when raising the temperature from room temperature to the control temperature. Due to this, it is possible to promote internal oxidation and promote the concentration of B.

From the viewpoint of suitably concentrating B, the control temperature may be 460°C or more, 470°C or more, or 480°C or more. The control temperature may also be 540°C or less, 530°C or less, or 520°C or less. From the viewpoint of suitably causing internal oxidation and concentrating B, the dew point in the range when raising the temperature from room temperature to the control temperature may be -38°C or more, -37°C or more, or -35°C or more. The dew point in the range when raising the temperature from room temperature to the control temperature may be 18°C or less, 17°C or less, or 15°C or less. The dew point in the range from the control temperature to the holding temperature may also be -18°C or more, -17°C or more, or -15°C or more, The dew point in the range from the control temperature to the holding temperature may also be 18°C or less, 17°C or less, or 15°C or less.

By making the dew point rise at the control temperature or more in the annealing step in the state where strain is imparted to the surface layer of the steel sheet by the above-mentioned method, internal oxidation rapidly proceeds at the surface layer of the steel sheet and B is taken into the oxides formed inside of the steel sheet whereby B concentrates at the surface layer of the steel sheet, B segregates at the Fe grain boundaries, and the above-mentioned distribution of concentration of B at the surface layer is obtained.

The annealing is performed in the state where a 1 to 20 MPa tension is applied. If tension is applied at the time of annealing, strain is introduced into the steel sheet more effectively and the B concentration at the surface layer is promoted.

[Plating Step]

Using the steel sheet produced as explained above, a plated steel sheet may be produced by a method of production including a plating step. The plating may be performed in accordance with a method known to persons skilled in the art. The plating, for example, may be performed by hot dip coating or may be performed by electroplating, vapor deposition plating, flame spraying, and cold spraying. Preferably the plating is performed by hot dip coating. The conditions of the plating step may be suitably set considering the chemical composition, thickness, deposition amount, etc. of the desired plating layer.

[Alloying Step]

After the plating step, a known alloying treatment may be performed to alloy the plating. The conditions of the alloying step may be suitably set considering the chemical composition, thickness, amount of deposition, etc. of the desired plating layer.

[Spot Welding Step]

A plurality of the above steel sheets are overlaid and spot welded to obtain the welded joint. The steel sheets may be the same in type or may differ in chemical composition etc. At the very least, so long as the one steel sheet arranged at the outermost side is the above high strength steel sheet, the other steel sheets may be general commercially available steel sheets.

The conditions of the spot welding are not particularly limited. For example, dome radius type tip diameter 8 mm weld electrodes can be used for spot welding by a squeezing force of 5.0 kN, a weld time of 1.2 seconds, and a weld current of 12 kA to produce a welded joint.

The welded joint according to the present invention suppresses LME cracking at the time of production, therefore can be suitably used in automobiles, household electrical appliances, building materials, and other broad fields. In particular, it preferably used in the automobile field.

EXAMPLES

Below, examples will be used to explain the present invention in more detail. The present invention is not limited to these examples. First, the method of production of the steel sheets used for producing the welded joints of the examples will be explained.

<Example No. 1>

Molten steel was smelted in a blast furnace and cast by continuous casting to obtain a steel slab having a chemical composition described in No. 1 of Table 1. The obtained steel slab was heated to 1200°C and hot rolled by an end temperature of finish rolling of 950°C and reduction rate of finish rolling of 30% to obtain a hot rolled steel sheet. The obtained hot rolled steel sheet was coiled up by a coiling temperature of 650°C.

After coiling, the steel sheet was pickled for 40 seconds using a 40°C 5 mass% hydrochloric acid solution. After pickling, it was cold rolled by a reduction rate of 50% to obtain a cold rolled steel sheet. The thickness of the cold rolled steel sheet was 1.6 mm.

After that, the steel sheet was annealed by a holding temperature of 800°C and holding time of 0 second in an oxygen concentration 20 ppm or less furnace in a $N_2$ -4vol%$H_2$ gas atmosphere to prepare a steel sheet sample. The rate of temperature rise at the time of annealing was 5.0°C/s. The dew point of the annealing atmosphere was -20°C from room temperature to the control temperature, the control temperature being 500°C, and -10°C from the control temperature to the holding temperature. Further, the annealing was performed while applying 15 MPa tension. Note that, a holding time of 0 second means immediately starting to lower the temperature after raising the temperature to 800°C.

<Example Nos. 2 to 32>

Except for making the chemical composition the ones described in Table 1 and making the annealing conditions and the plating conditions the ones described in Table 2, steel sheets were prepared under conditions similar to Example 1. In the plating types in Table 2, "a" means a plating obtained by dipping in a 450°C hot dip galvanization bath (Zn-0.14%Al) for 3 seconds, pulling the sheet out by 100 mm/s, controlling the plating deposition amount to 50 g/m² by $N_2$ wiping gas, then alloying at 520°C for 30 seconds, "b" means hot dip galvanization minus the alloying at "a", and "c" means hot dip galvanization making the plating bath at "a" Zn-1.5%Al-1.5%Mg and omitting alloying.

(Roughness After Pickling)

When producing the steel sheet,, the hot rolled steel sheet after pickling was measured for roughness of the surface. The roughness of the surface was measured based on JIS B 0601: 2013 by randomly selecting 10 locations at the surface of the surface layer part side, measuring the surface profile at each of the locations by a contact type surface roughness meter, and arithmetically averaging the surface roughnesses at these locations to find the "arithmetic average roughness Ra". The roughness of the surface of the hot rolled steel sheet are shown in Table 2.

[Table 1]

Table 1

| No. | Class | Chemical composition (mass%), balance: Fe and impurities | | | | | | | | | | |
|---|---|---|---|---|---|---|---|---|---|---|---|---|
| | | C | Si | Mn | sol. Al | P | S | N | B | Ti | Nb | Others |
| 1 | Ex. | 0.05 | 0.7 | 2.0 | 0.0 | 0.0001 | 0.0006 | 0.0003 | 0.0009 | 0.0210 | 0.0000 | |
| 2 | Ex. | 0.10 | 0.7 | 2.0 | 0.0 | 0.0080 | 0.0005 | 0.0003 | 0.0009 | 0.0210 | 0.0210 | Hf: 0.01 |
| 3 | Ex. | 0.10 | 1.0 | 2.0 | 0.0 | 0.0080 | 0.0007 | 0.0002 | 0.0007 | 0.0066 | 0.0007 | |
| 4 | Ex. | 0.10 | 1.0 | 2.5 | 1.0 | 0.0067 | 0.0003 | 0.0007 | 0.0039 | 0.0100 | 0.0001 | |
| 5 | Ex. | 0.10 | 1.0 | 2.5 | 0.5 | 0.0020 | 0.0007 | 0.0002 | 0.0036 | 0.0092 | 0.0009 | |
| 6 | Ex. | 0.20 | 1.0 | 2.0 | 0.5 | 0.0100 | 0.0004 | 0.0001 | 0.0005 | 0.0270 | 0.0003 | Mg: 0.02 |
| 7 | Ex. | 0.20 | 1.0 | 2.0 | 0.7 | 0.0020 | 0.0001 | 0.0009 | 0.0007 | 0.0069 | 0.0007 | Zr: 0.025 |
| 8 | Ex. | 0.20 | 1.0 | 2.2 | 0.8 | 0.0008 | 0.0004 | 0.0006 | 0.0032 | 0.0770 | 0.0000 | |
| 9 | Ex. | 0.20 | 1.0 | 2.5 | 0.7 | 0.0017 | 0.0006 | 0.0003 | 0.0018 | 0.0590 | 0.0006 | Cr: 0.10 |
| 10 | Ex. | 0.20 | 1.0 | 2.3 | 1.0 | 0.0011 | 0.0009 | 0.0004 | 0.0008 | 0.0770 | 0.0008 | Cu: 0.07 |
| 11 | Ex. | 0.20 | 1.0 | 2.3 | 0.1 | 0.0031 | 0.0007 | 0.0005 | 0.0009 | 0.0730 | 0.0007 | |
| 12 | Ex. | 0.20 | 1.0 | 2.5 | 1.0 | 0.0065 | 0.0010 | 0.0002 | 0.0029 | 0.0730 | 0.0007 | Ni: 0.08 |
| 13 | Ex. | 0.25 | 1.0 | 2.5 | 0.0 | 0.0012 | 0.0002 | 0.0002 | 0.0008 | 0.0890 | 0.0009 | |
| 14 | Ex. | 0.25 | 1.0 | 2.5 | 0.5 | 0.0040 | 0.0005 | 0.0003 | 0.0008 | 0.0047 | 0.0005 | V: 0.01 |
| 15 | Ex. | 0.30 | 1.0 | 5.0 | 0.5 | 0.0099 | 0.0002 | 0.0005 | 0.0008 | 0.0700 | 0.0007 | |
| 16 | Ex. | 0.30 | 3.0 | 0.3 | 0.5 | 0.0110 | 0.0007 | 0.0009 | 0.0024 | 0.0160 | 0.0002 | |
| 17 | Ex. | 0.35 | 1.0 | 3.0 | 1.5 | 0.0092 | 0.0003 | 0.0007 | 0.0010 | 0.0180 | 0.0002 | Mo: 0.09 |
| 18 | Ex. | 0.35 | 1.0 | 2.5 | 1.0 | 0.0091 | 0.0002 | 0.0005 | 0.0006 | 0.0096 | 0.0010 | REM: 0.001 |
| 19 | Ex. | 0.40 | 0.7 | 2.5 | 1.9 | 0.0045 | 0.0004 | 0.0007 | 0.0008 | 0.0230 | 0.0002 | |
| 20 | Ex. | 0.40 | 1.0 | 2.5 | 1.0 | 0.0035 | 0.0004 | 0.0005 | 0.0007 | 0.0130 | 0.0001 | W: 0.08 |
| 21 | Ex. | 0.40 | 1.0 | 2.2 | 1.0 | 0.0082 | 0.0005 | 0.0008 | 0.0020 | 0.0320 | 0.0003 | |
| 22 | Ex. | 0.40 | 1.0 | 2.2 | 1.0 | 0.0080 | 0.0005 | 0.0002 | 0.0019 | 0.0540 | 0.0005 | Ca: 0.0100 |
| 23 | Comp. ex. | 0.20 | <u>0.5</u> | 2.0 | 1.0 | 0.0100 | 0.0008 | 0.0007 | 0.0008 | 0.0037 | 0.0002 | |
| 24 | Comp. ex. | 0.20 | <u>3.2</u> | 2.0 | 1.0 | 0.0100 | 0.0007 | 0.0004 | 0.0007 | 0.0073 | 0.0002 | |
| 25 | Comp. ex. | 0.20 | 1.0 | 2.0 | 1.0 | 0.0100 | 0.0005 | 0.0003 | 0.0044 | 0.0087 | 0.0007 | |
| 26 | Comp. ex. | 0.20 | 1.0 | 2.0 | 1.0 | 0.0100 | 0.0008 | 0.0004 | 0.0005 | 0.0017 | 0.0001 | |
| 27 | Comp. ex. | 0.20 | 1.0 | 2.0 | 1.0 | 0.0100 | 0.0005 | 0.0003 | 0.0010 | 0.0087 | 0.0009 | |

(continued)

| No. | Class | Chemical composition (mass%), balance: Fe and impurities | | | | | | | | | | |
|---|---|---|---|---|---|---|---|---|---|---|---|---|
| | | C | Si | Mn | sol. Al | P | S | N | B | Ti | Nb | Others |
| 28 | Comp. ex. | 0.20 | 1.0 | 2.0 | 1.0 | 0.0100 | 0.0008 | 0.0004 | 0.0005 | 0.0017 | 0.0003 | |
| 29 | Comp. ex. | 0.20 | 1.0 | 2.0 | 1.0 | 0.0100 | 0.0008 | 0.0004 | 0.0005 | 0.0170 | 0.0000 | |
| 30 | Comp. ex. | 0.20 | 1.0 | 2.0 | 1.0 | 0.0100 | 0.0008 | 0.0004 | 0.0005 | 0.0017 | 0.0008 | |
| 31 | Comp. ex. | 0.20 | 1.0 | 2.0 | 1.0 | 0.0100 | 0.0007 | 0.0003 | 0.0014 | 0.0230 | 0.0007 | |
| 32 | Comp. ex. | 0.20 | 1.0 | 2.0 | 1.0 | 0.0100 | 0.0010 | 0.0001 | 0.0008 | 0.0081 | 0.0003 | |
| * Underlines indicate outside scope of production conditions of present invention. | | | | | | | | | | | | |

[Table 2]

Table 2

| No. | Class | Roughness after pickling Ra (μm) | Annealing step | | | | | Plating type |
|---|---|---|---|---|---|---|---|---|
| | | | Holding temp. (°C) | Holding time (s) | Control temp. (°C) | Dew point from room temp. to control temp. (°C) | Dew point from control temp. to holding temp. (°C) | |
| 1 | Ex. | 1.5 | 800 | 0 | 500 | -20 | -10 | a |
| 2 | Ex. | 2.5 | 800 | 30 | 500 | -40 | -19 | a |
| 3 | Ex. | 1.5 | 800 | 20 | 450 | -20 | -10 | a |
| 4 | Ex. | 1.5 | 820 | 30 | 500 | -20 | 0 | b |
| 5 | Ex. | 2.5 | 840 | 30 | 500 | -20 | 0 | b |
| 6 | Ex. | 1.7 | 860 | 40 | 550 | -20 | 0 | b |
| 7 | Ex. | 2.6 | 860 | 100 | 500 | -20 | 0 | b |
| 8 | Ex. | 2.6 | 860 | 100 | 500 | -20 | 0 | b |
| 9 | Ex. | 2.9 | 860 | 100 | 500 | -20 | 0 | b |
| 10 | Ex. | 3.5 | 860 | 100 | 500 | -20 | 0 | c |
| 11 | Ex. | 3.2 | 860 | 100 | 500 | -20 | 0 | b |
| 12 | Ex. | 2.5 | 860 | 100 | 500 | -20 | 0 | b |
| 13 | Ex. | 2.4 | 860 | 100 | 500 | -20 | 0 | b |
| 14 | Ex. | 3.5 | 860 | 100 | 500 | -20 | 0 | c |
| 15 | Ex. | 3.2 | 860 | 100 | 500 | -20 | 0 | b |
| 16 | Ex. | 3.0 | 860 | 100 | 500 | -20 | 0 | b |
| 17 | Ex. | 3.8 | 860 | 360 | 500 | -20 | 0 | b |
| 18 | Ex. | 2.9 | 860 | 100 | 500 | -20 | 0 | c |
| 19 | Ex. | 2.6 | 860 | 100 | 500 | -20 | 0 | c |

(continued)

| No. | Class | Roughness after pickling Ra (μm) | Annealing step | | | | | Plating type |
| --- | --- | --- | --- | --- | --- | --- | --- | --- |
| | | | Holding temp. (°C) | Holding time (s) | Control temp. (°C) | Dew point from room temp. to control temp. (°C) | Dew point from control temp. to holding temp. (°C) | |
| 20 | Ex. | 2.5 | 900 | 100 | 500 | -20 | 0 | c |
| 21 | Ex. | 3.1 | 860 | 100 | 500 | -20 | 0 | c |
| 22 | Ex. | 2.7 | 860 | 100 | 500 | -20 | 0 | b |
| 23 | Comp. ex. | 1.5 | 800 | 30 | 500 | -30 | -10 | b |
| 24 | Comp. ex. | 1.5 | 800 | 30 | 500 | -30 | -10 | a |
| 25 | Comp. ex. | 1.5 | 800 | 30 | 500 | <u>-60</u> | -10 | a |
| 26 | Comp. ex. | 1.5 | 800 | 30 | 500 | <u>0</u> | 0 | a |
| 27 | Comp. ex. | 1.5 | 800 | 30 | 500 | -30 | <u>-27</u> | a |
| 28 | Comp. ex. | 1.5 | 800 | 30 | 500 | -30 | <u>23</u> | a |
| 29 | Comp. ex. | 1.5 | 800 | 30 | <u>420</u> | -30 | -10 | a |
| 30 | Comp. ex. | 1.5 | 800 | 30 | <u>570</u> | -30 | -10 | a |
| 31 | Comp. ex. | 1.5 | <u>720</u> | 30 | 500 | -30 | -10 | a |
| 32 | Comp. ex. | <u>1.2</u> | 800 | 30 | 500 | -30 | -10 | a |
| * Underlines indicate outside scope of production conditions of present invention. | | | | | | | | |

Two of each of the steel sheets obtained in the examples were overlaid and spot welded using dome radius type tip diameter 8 mm weld electrodes at a weld angle of 5°, a squeezing force of 5.0 kN, a weld time of 1.2 second, and a weld current of 12 kA to produce a welded joint. This was evaluated for structures of the heat affected zone and non-heat affected zone and the LME resistance at the time of production.

(Hardness of Steel Sheet)

The hardness of the steel sheet was measured at the non-heat affected zone at a distance of 5 mm or more from an outer end of the spot welded part of the welded joint. The hardness of the steel sheet was measured at 1/2 depth of the steel sheet based on JIS Z 2244: 2009. The measurement load was made 200 gf. The hardness was evaluated in the following way. An evaluation of A or more was judged as excellent in hardness.

Evaluation AAA: 380 Hv or more
Evaluation AA: 300 Hv or more and less than 380 Hv
Evaluation A: 240 Hv or more and less than 300 Hv
Evaluation B: less than 240 Hv

(High Ferrite Layer)

A sample cut to 25 mm×15 mm was taken from a position 50 μm to the outside from the end of the pressure contact zone of the welded joint and was etched by Nital. The T cross-section of the sample was examined by an SEM and the thickness of the high ferrite layer with a ferrite area ratio of 90% or more was measured. The thickness was measured at five points at equal intervals in a range of 500 μm in the T direction and the average value of the same was obtained. Here, the starting point of the "thickness" is the surface of the steel sheet if a steel sheet which has not been plated or is the interface of the plating layer and steel sheet if a steel sheet which has been plated and are determined by SEM image.

(Concentrated B Part)

A sample cut to 30 mm×30 mm was taken from a position 50 μm to the outside from the end of the pressure contact zone of the welded joint and was measured for the thickness of the concentrated B layer in TOF-SIMS measurement. The concentrated B part was made the portion where the B intensity found in the TOF-SIMS measurement became 2 times or more of the B intensity of the position of a depth of 50 μm found in the TOF-SIMS measurement. The analysis by the TOF-SIMS was performed using as an apparatus a TOF-SIMS (made by ION-TOF) under conditions of a primary ion: $Bi_3^{2+}$, acceleration voltage: 25 kV, measurement area: 50 μm square. The measurement was performed while moving the field in a thickness direction of the high strength steel sheet so that the concentrated B part of the high strength steel sheet surface and the position with a depth from the surface of 50 μm are measured.

(B Distribution at Steel Surface Layer of Non-heat Affected Zoner)

The B distribution at the steel surface layer of the steel sheet at the non-heat affected zone was evaluated as follows:

A sample cut to 50 mm×50 mm size from the non-heat affected zone of each welded joint was used for GDS. The GDS was measured five times in the sheet thickness direction. The average value of these was made the B concentration. The measurement conditions were as follows: The B concentrations corresponding to the x ( μm) depth and 150 μm depth are designated as Bx and B150.

> Apparatus: high frequency glow discharge optical emission spectrometry apparatus (made by LECO Japan Corporation, Model Name "GDS850A"
> Ar gas pressure: 0.3 MPa
> Anode diameter: 4 mmφ
> RF output: 30W
> Measurement time: 200 to 1500 seconds

From the Bx found, the depth satisfying the formula (1): Bx/B150≥5.0 and the value of the left side of formula (2): Bmax/B150 were found.

(LME Resistance at Time of Production of Welded Joint)

Two samples cut to 50 mm×100 mm size were cut from each steel sheet and hot dip galvannealed steel sheet. These two samples were spot welded using dome radius type 8 mm welding electrodes by a weld angle of 5°, a squeezing force of 5.0 kN, a weld time of 1.2 seconds, and a weld current of 12 kA to produce a welded joint. Note that when using a steel sheet which has not been plated to produce a welded joint, weld electrodes which have spot welded 10 times or more a steel sheet which has been given plating containing zinc right before were used.

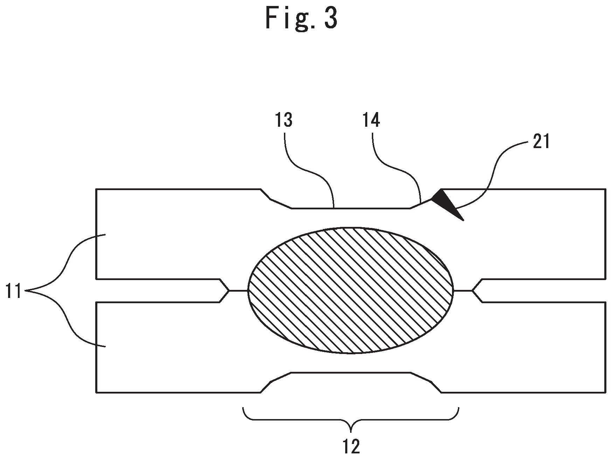

Referring to FIG. 3, the method of evaluation of the LME resistance at the time of production of a welded joint will be explained. The LME resistance was evaluated by overlaying two steel sheets 11 and spot welding them, then determining the length of an LME crack (cracking of shoulder part 21) formed at the shoulder part 14 of the welded part 12 formed. The "shoulder part" means the slanted part of the depressed recess 13 formed by spot welding. The length of the cracking 21 of the shoulder part was used for evaluation as shown below. In the examples, if evaluated as A or more, the LME resistance at the time of production of a welded joint was judged excellent.

> Evaluation AAA: 0 μm
>
> Evaluation AA: more than 0 μm and less than 50 μm

Evaluation A: 50 μm or more and less than 160 μm

Evaluation B: 160 μm or more

The results of evaluation are shown in Table 3.

[Table 3]

Table 3

| No. | Class | Heat affected zone | | Non-heat affected zone | | Properties | |
|---|---|---|---|---|---|---|---|
| | | High ferrite layer thickness (μm) | Concentrated B part thickness (μm) | Depth satisfying formula (1) (μm) | Left side of formula (2) | Hardness | LME resistance |
| 1 | Ex. | 5 | 2.1 | 0.5 | 3 | A | A |
| 2 | Ex. | 6 | 1.0 | 1.6 | 2 | AA | AA |
| 3 | Ex. | 7 | 2.2 | 1.2 | 4 | A | A |
| 4 | Ex. | 6 | 2.2 | 1.5 | 5 | AA | AA |
| 5 | Ex. | 7 | 2.3 | 1.8 | 6 | AA | AAA |
| 6 | Ex. | 8 | 3.3 | 1.9 | 8 | AA | AAA |
| 7 | Ex. | 10 | 3.0 | 2.2 | 11 | AA | AAA |
| 8 | Ex. | 11 | 4.0 | 2.3 | 13 | AA | AAA |
| 9 | Ex. | 12 | 4.2 | 2.4 | 14 | AA | AAA |
| 10 | Ex. | 14 | 5.0 | 2.6 | 12 | AA | AAA |
| 11 | Ex. | 12 | 4.0 | 3.5 | 14 | AA | AAA |
| 12 | Ex. | 12 | 5.2 | 2.4 | 13 | AA | AAA |
| 13 | Ex. | 11 | 6.4 | 2.2 | 13 | AAA | AAA |
| 14 | Ex. | 10 | 5.2 | 3.1 | 12 | AAA | AAA |
| 15 | Ex. | 12 | 4.1 | 3.0 | 12 | AAA | AAA |
| 16 | Ex. | 13 | 5.0 | 3.0 | 12 | AA | AAA |
| 17 | Ex. | 22 | 5.5 | 6.3 | 23 | AAA | AAA |
| 18 | Ex. | 11 | 6.2 | 2.5 | 16 | AAA | AAA |
| 19 | Ex. | 12 | 6.4 | 2.3 | 12 | AAA | AAA |
| 20 | Ex. | 20 | 5.2 | 3.4 | 17 | AAA | AAA |
| 21 | Ex. | 12 | 6.1 | 3.2 | 11 | AAA | AAA |
| 22 | Ex. | 14 | 5.6 | 2.8 | 13 | AAA | AAA |
| 23 | Comp. ex. | 2 | 0.0 | 0.0 | 0 | AA | B |
| 24 | Comp. ex. | 10 | 1.0 | 0.7 | 2 | AA | B |
| 25 | Comp. ex. | 2 | 0.0 | 0.0 | 0 | AA | B |
| 26 | Comp. ex. | 3 | 0.1 | 0.2 | 1 | AA | B |
| 27 | Comp. ex. | 4 | 0.1 | 0.3 | 1 | AA | B |
| 28 | Comp. ex. | 3 | 0.0 | 0.2 | 1 | AA | B |
| 29 | Comp. ex. | 4 | 0.2 | 0.3 | 1 | AA | B |

(continued)

| No. | Class | Heat affected zone | | Non-heat affected zone | | Properties | |
|---|---|---|---|---|---|---|---|
| | | High ferrite layer thickness (μm) | Concentrated B part thickness (μm) | Depth satisfying formula (1) (μm) | Left side of formula (2) | Hardness | LME resistance |
| 30 | Comp. ex. | 8 | 0.5 | 0.3 | 1 | AA | B |
| 31 | Comp. ex. | 2 | 0.0 | 0.1 | 1 | AA | B |
| 32 | Comp. ex. | 8 | 0.7 | 0.4 | 2 | AA | B |
| * Underlines indicate outside scope of present invention or desired properties not obtained. | | | | | | | |

Nos. 1 to 22 are invention examples. It was confirmed that these are excellent in welded joint LME resistance at the time of production.

In No. 23, the content of Si of the steel sheet was low. For this reason, in the annealing step at the time of production of the steel sheet, decarburization and internal oxidation did not sufficiently proceed, the high ferrite layer became thin, the deboronation phenomenon could not be stopped, and the concentrated B part was not formed. As a result, the welded joint LME resistance at the time of production was inferior.

In No. 24, the content of Si of the steel sheet was large. For this reason, even if a high ferrite layer and concentrated B part were formed, the LME could not be suppressed. As a result, the welded joint LME resistance at the time of production was inferior.

In No. 25, in the annealing step at the time of production of the steel sheet, the dew point of the first half was low. For this reason, Si and Mn became externally oxidized, internal oxidation did not proceed in the second half of the annealing step, the high ferrite layer became thin, and the concentrated B part was not formed. As a result, the welded joint LME resistance at the time of production was inferior.

In No. 26, in the annealing step at the time of production of the steel sheet, the dew point of the first half was high. For this reason, internal oxidation proceeded at the low temperature of the first half of the annealing step, the strain imparted to the surface layer of the steel sheet was released, internal oxidation did not occur in the range from the control temperature to the holding temperature, the deboronation phenomenon could not be stopped, and the high ferrite layer and concentrated B part became thin. As a result, the welded joint LME resistance at the time of production was inferior.

In No. 27, in the annealing step at the time of production of the steel sheet, the dew point of the second half was low. For this reason, internal oxidation for suppressing the deboronation phenomenon did not sufficient proceed and the high ferrite layer and concentrated B part became thin. As a result, the welded joint LME resistance at the time of production was inferior.

In No. 28, in the annealing step at the time of production of the steel sheet, the dew point of the second half was high. For this reason, external oxidation proceeded, internal oxidation sufficient for suppressing the deboronation phenomenon did not proceed, the high ferrite layer became thin, and the concentrated B part was not formed. As a result, the welded joint LME resistance at the time of production was inferior.

In No. 29, the control temperature was low. For this reason, the dew point rose at a low temperature, internal oxidation proceeded at a low temperature, the strain imparted to the steel sheet surface layer was released, internal oxidation sufficient for suppressing the deboronation phenomenon did not proceed in the range from the control temperature to the holding temperature, and the high ferrite layer and the concentrated B part became thin. As a result, the welded joint LME resistance at the time of production was inferior.

In No. 30, the control temperature was high. For this reason, the strain imparted to the surface layer of the steel sheet was released before internal oxidation proceeded at a high temperature, internal oxidation sufficient for suppressing the deboronation phenomenon did not occur, and the concentrated B part became thinner. As a result, the welded joint LME resistance at the time of production was inferior.

In No. 31, annealing temperature was low. For this reason, internal oxidation and B concentration did not sufficiently proceed, the high ferrite layer became thin, and a concentrated B part was not formed. As a result, the welded joint LME resistance at the time of production was inferior.

In No. 32, the roughness of the steel sheet surface after pickling at the time of production of the steel sheet was small. For this reason, sufficient strain was not imparted to the surface layer of the steel sheet and B did not become concentrated and the concentrated B part became thin even by high dew point annealing. As a result, the welded joint LME resistance at the time of production was inferior.

REFERENCE SIGNS LIST

1 high ferrite layer
11 steel sheet
12 welded part
13 recess
14 shoulder part
21 cracking of shoulder part

**Claims**

1. A welded joint comprising

    a plurality of steel sheets overlaid,
    a nugget joining the plurality of steel sheets,
    a spot welded part having a pressure contact zone and a heat affected zone formed around the nugget,
    a non-heat affected zone of a region at the outside of the heat affected zone, and
    a separation zone formed around the pressure contact zone,
    wherein
    among the plurality of steel sheets, at least the one steel sheet arranged at the outermost side is a high strength steel sheet with a Vickers hardness at a center of sheet thickness of 240 Hv or more,
    a chemical composition of the high strength steel sheet comprises, by mass%,

    C: 0.05 to 0.40%,
    Si: 0.7 to 3.0%,
    Mn: 0.1 to 5.0%,
    sol. Al: 0 to 2.0%,
    P: 0.0300% or less,
    S: 0.0300% or less,
    N: 0.0100% or less,
    B: 0.0005 to 0.0050%,
    Ti: 0.0010 to 0.1000%,
    Nb: 0 to 0.2000%,
    V: 0 to 0.15%,
    Cr: 0 to 2.00%,
    Ni: 0 to 2.00%,
    Cu: 0 to 2.00%,
    Mo: 0 to 1.00%,
    W: 0 to 1.00%,
    Ca: 0 to 0.1000%,
    Mg: 0 to 0.100%,
    Zr: 0 to 0.100%,
    Hf: 0 to 0.100%,
    REM: 0 to 0.100% and

    balance of Fe and impurities,
    at a position of 50 $\mu$m to the outside from the end of the pressure contact zone, a high ferrite layer with an area ratio of ferrite phases of 90% or more is present in a thickness direction of the high strength steel sheet from a surface of the high strength steel sheet by a 5 $\mu$m or more thickness, and,
    at a position of 50 $\mu$m to the outside from the end of the pressure contact zone, a concentrated B part with a B intensity of 2 times or more of the B intensity of a depth of 50 $\mu$m measured by TOF-SIMS measurement is present at a 1.0 $\mu$m or more thickness from the surface of the high strength steel sheet.

2. The welded joint according to claim 1, wherein the high strength steel sheet comprises a plating layer comprising Zn formed on one surface or both surfaces of the high strength steel sheet.

3. The welded joint according to claim 1 or 2, wherein in the non-heat affected zone, the depth where an emission intensity Bx at a depth "x" ($\mu$m) and an emission intensity B150 at a depth 150 $\mu$m in GDS measurement in the thickness direction from the steel sheet surface satisfy

$$Bx/B150 \geq 5 \ldots (1)$$

is 1.5 $\mu$m or more.

4. The welded joint according to claim 3, wherein in the non-heat affected zone, a maximum value Bmax of emission intensity of B in a range of a depth of 5 $\mu$m or less and an emission intensity B150 at a depth 150 $\mu$m in GDS measurement in the thickness direction from the steel sheet surface satisfy

$$Bmax/B150 \geq 8 \ldots (2)$$

5. The welded joint according to claim 1 or 2, wherein a thickness of the high ferrite layer is 10 $\mu$m or more.

# Fig. 1

# Fig. 2

# Fig. 3

## INTERNATIONAL SEARCH REPORT

| | International application No. |
|---|---|
| | **PCT/JP2024/016972** |

**A.    CLASSIFICATION OF SUBJECT MATTER**

*C22C 38/00*(2006.01)i; *B23K 11/16*(2006.01)i; *C21D 9/46*(2006.01)i; *C22C 38/58*(2006.01)i; *C23C 2/02*(2006.01)i; *C23C 2/06*(2006.01)i; *C23C 2/40*(2006.01)i; *C22C 18/00*(2006.01)n; *C22C 18/04*(2006.01)n

FI:    C22C38/00 301Z; C22C38/00 301U; C22C38/00 301T; C22C38/58; B23K11/16 311; C21D9/46 F; C21D9/46 J; C23C2/02; C23C2/06; C23C2/40; C22C18/00; C22C18/04

According to International Patent Classification (IPC) or to both national classification and IPC

**B.    FIELDS SEARCHED**

Minimum documentation searched (classification system followed by classification symbols)

C22C38/00-38/60; B23K11/16; C21D9/46-9/48; C23C2/00-2/40; C22C18/00-18/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2019-504196 A (POSCO) 14 February 2019 (2019-02-14)<br>claims, paragraphs [0023]-[0024], [0044] | 1-5 |
| A | JP 2011-231346 A (NISSHIN STEEL CO., LTD.) 17 November 2011 (2011-11-17)<br>claims, paragraphs [0001]-[0008] | 1-5 |
| A | WO 2014/157155 A1 (NISSHIN STEEL CO., LTD.) 02 October 2014 (2014-10-02)<br>claims, paragraphs [0006]-[0011] | 1-5 |
| A | WO 2023/132350 A1 (NIPPON STEEL CORPORATION) 13 July 2023 (2023-07-13)<br>claims | 1-5 |
| P, A | WO 2024/053669 A1 (NIPPON STEEL CORPORATION) 14 March 2024 (2024-03-14)<br>claims | 1-5 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 May 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/016972**

| Patent document cited in search report | | | Publication date (day/month/year) | Patent family member(s) | | | Publication date (day/month/year) |
|---|---|---|---|---|---|---|---|
| JP | 2019-504196 | A | 14 February 2019 | EP | 3392363 | A1 | |
| | | | | claims, paragraphs [0022]-[0023], [0043] | | | |
| | | | | US | 2018/0371570 | A1 | |
| | | | | WO | 2017/105064 | A1 | |
| | | | | CN | 108431273 | A | |
| JP | 2011-231346 | A | 17 November 2011 | (Family: none) | | | |
| WO | 2014/157155 | A1 | 02 October 2014 | EP | 2980259 | A1 | |
| | | | | claims, paragraphs [0006]-[0012] | | | |
| | | | | US | 2016/0024632 | A1 | |
| | | | | CN | 105051238 | A | |
| | | | | JP | 2014-208902 | A | |
| WO | 2023/132350 | A1 | 13 July 2023 | (Family: none) | | | |
| WO | 2024/053669 | A1 | 14 March 2024 | (Family: none) | | | |

Form PCT/ISA/210 (patent family annex) (July 2022)

**REFERENCES CITED IN THE DESCRIPTION**

**Patent documents cited in the description**

- WO 2019116531 A

- WO 2020218575 A